(19) Europäisches Patentamt
European Patent Office
Office européen des brevets

(11) EP 4 650 916 A1

(12) EUROPEAN PATENT APPLICATION

(43) Date of publication:
19.11.2025 Bulletin 2025/47

(51) International Patent Classification (IPC):
G06F 3/01 (2006.01)          G06F 3/0346 (2013.01)
G06F 3/03 (2006.01)

(21) Application number: 24176415.8

(22) Date of filing: 16.05.2024

(52) Cooperative Patent Classification (CPC):
G06F 3/015; G06F 3/017; G06F 3/0304;
G06F 3/0346

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: SNAP GmbH
44801 Bochum (DE)

(72) Inventors:
• Weber, Corinna
44801 Bochum (DE)
• Heim, Mavin
44801 Bochum (DE)

(74) Representative: Maiwald GmbH
Engineering
Elisenhof
Elisenstrasse 3
80335 München (DE)

(54) **METHOD FOR PROVIDING A NEURAL NETWORK FOR ANALYZING EEG DATA FOR USE IN PROVIDING A BRAIN COMPUTER INTERFACE**

(57) The invention provides a computer-implemented method for providing a neural network for analyzing EEG data for use in providing a brain computer interface, the method comprising obtaining training data from EEG data of a subject and movement reference data associated with the EEG data, the EEG data and movement reference data acquired concurrently and while a subject carries out motions and/or imagines motions of a body part directed at controlling a software, wherein obtaining the training data comprises automatic classification of the movement reference data and automatically labeling at least part of the EEG data based on the classification of the movement reference data associated with the EEG data; and using the training data to train a neural network to predict, from EEG data, a motion of the body part imagined and/or carried out by the subject.

Fig. 3

**Description**

FIELD OF THE INVENTION

The invention provides a computer-implemented method for providing a neural network for analyzing EEG data for use in providing a brain computer interface, a method for providing a brain computer interface, a system, a computer program product, and a computer-readable medium.

BACKGROUND

Providing brain computer interfaces has many potential use cases, such as replacing movement of a user of the interface for controlling software or replacing an input via an input device or motion detection for controlling software.

EEG data, in principle, yield a wealth of information on brain activity, yet they are also challenging to process correctly. While the use of neural networks is a promising approach to address these challenges, the problem still remains challenging.

Particularly, quality of the predictions of a neural network depends on the neural network itself and on the training data used. EEG data is generally challenging for neural networks. Moreover, it is often difficult to obtain training data suitable for the prediction scenario at hand for training the neural network to make predictions based on the EEG data.

Thus, it is an object of the present invention to provide a method that allows for overcoming at least some of the above challenges, particularly allowing for improved training of neural networks for predictions based on EEG data for providing brain computer interfaces.

SUMMARY

The object is achieved by the present invention. The invention provides methods, systems, computer program products, and computer-readable mediums according to the independent claims. Preferred embodiments are laid down in the dependent claims.

The present disclosure provides a computer-implemented method for providing a neural network for analyzing EEG data for use in providing a brain computer interface, the method comprising obtaining training data from EEG data of a subject and movement reference data associated with the EEG data, the EEG data and movement reference data acquired concurrently and while a subject carries out motions and/or imagines motions of a body part directed at controlling a software. Obtaining the training data comprises automatic classification of the movement reference data and automatically labeling at least part of the EEG data based on the classification of the movement reference data associated with the EEG data. The method further comprises using the training data to train a neural network to predict, from EEG data, a motion of the body part imagined and/or carried out by the subject.

Hereinbelow, the terms subject and user are used. A subject designates a person being subject to data acquisition for training and/or for using of the BCI. A person being subject to data acquisition for using the BCI may be referred to as a user. It is noted that the person(s) participating acquiring training data may the same or different from the person(s) using the BCI.

A neural network, according to the present disclosure, may comprise a deep neural network, particularly a functional neural network, FNN, or a compact convolutional network for EEG data, such as EEGNet. More details in this regard will be outlined further below.

EEG data comprises data representative of an electroencephalogram. EEG data may be data obtained by one or more electrodes mounted on the head of a subject. Particularly, the EEG data may be data obtained with non-invasive techniques. Electrodes may, particularly, be placed on the head, for example by being incorporated in a wearable headpiece. Known methods and devices for acquiring EEG data may be used.

A brain computer interface, according to the present disclosure, may be any software, hardware, or combination thereof that enables a computer to respond to brain activity of a subject, e.g. a user, directly or, in other words, to respond to brain activity of a subject, e.g. the user, without necessarily requiring any movement of a body part of the subject. In the present case, the interface may be hardware supported, particularly, may employ hardware for recording EEG data of the subject. Software associated with the interface may comprise software for processing the recorded EEG data so as to provide instructions for a computer.

As explained above, movement reference data associated with the EEG data is obtained. The movement reference data and the EEG data being associated may refer to the EEG data corresponding to a given movement, e.g., by movement reference data and EEG data being acquired concurrently for the same subject.

According to the present disclosure, the EEG data and the movement reference data are data acquired concurrently and while the subject carries out motions and/or imagines motions of a body part directed at controlling a software.

In other words, different scenarios may be envisaged for acquiring associated EEG and movement reference data. In a first scenario, a subject carries out motions of a body part, the motions directed at controlling a software. In a second scenario, a subject imagines motions of a body part (without actually carrying out said motions), the imagined motions directed at controlling a software. In a third scenario, a subject carries out and imagines motions of a body part, the (imagined) motions directed at controlling a software. This may be done subsequently, for example, by first carrying out motions and afterwards imagining motions or vice versa. The different scenarios and particularly how movement reference data is obtained for imagined motions will be outlined below in more detail.

The software may, in principle, be any type of software that enables a subject to interact with the software, e.g. via user interactions to control the software. In particular, the software may comprise a graphical user interface enabling the subject to observe a state of the software and interact with the software via a user input device, such as a keyboard, a touchpad, a mouse, a handheld controller, or the like. An example for a category of software suitable for acquiring the movement reference data is game software. Games of low complexity or degrees of freedom, such as Pong or Pacman or modifications thereof, may be used, but also more complex games are conceivable. A more complex interaction with the software may yield a more refined brain computer interface, yet less complex interactions may allow for reduced computational resource requirements. Thus, the software will be chosen based on the requirements presently at hand.

Where motions are actually carried out, movement reference data may be recorded using motion detection and/or based on an input device used by the subject for interacting with the software. This will be explained in more detail below.

Training data, according to the present disclosure, may be data to be used for training a neural network. It will be understood that the training of the neural network aims at the neural network being able to make predictions based on a set of (unknown) input data. Training data is data that is used to train the neural network to make said predictions more accurately than an untrained neural network. To that end, as an example, labelled data may be used. Details on the training will be provided further below.

As outlined above, the method comprises obtaining training data from EEG data of a subject and obtaining the training data comprises automatic classification of the movement reference data and automatically labeling at least part of the EEG data based on the classification of the movement reference data associated with the EEG data.

In other words, the movement reference data may be automatically classified, e.g. using a classifying technique known in the art. Labels may be created that reflect the result of the classification. For example, different movements may be classified into different classes. The labels assigned to the EEG data may, respectively, identify one class of the different classes, the class may be the result of the classification of the movement reference data associated with the EEG data. Thus, in other words, the label links EEG data with a movement carried out or imagined at the time of acquiring the EEG data by classifying the movement and labeling the EEG data with the result of the classification.

As explained above, the method comprises using the training data to train a neural network to predict, from EEG data, a motion of the body part imagined and/or carried out by the subject. The training itself may be carried out using known training methods.

As will be understood from the above, the method of the present disclosure allows for providing a brain computer interface without requiring any particular training, supervision, or skill of the subject. At the same time, high flexibility is provided as to the complexity and potentially resulting accuracy, by selecting a software with a higher or lower number of degrees of freedom. Moreover, where the software is a game, due to the well-defined nature of interactions with the game, a high confidence estimation as to the movement a subject is expected to make, can be provided. Such an estimation, as will be discussed in detail below, can be used in some potential training scenarios.

Thus, the method of the present disclosure allows for overcoming at least some of the above-identified challenges, particularly allowing for improved training of neural networks for predictions based on EEG data.

According to the present disclosure, neural networks, such as functional neural networks (FNNs), may be employed for providing an electroencephalography-based (EEG-based) brain computer interface (BCIs). FNNs represent a neural network architecture particularly suitable for time series analysis.

The present disclosure pioneers utilization of FNN for electroencephalography (EEG) classification. It also introduces and allows for real-time inference capabilities within EEG data analysis.

The present disclosure may provide a comprehensive pipeline encompassing data acquisition, synchronization, pre-processing, training of FNNs, and real-time inference. This facilitates the seamless integration of FNNs into real-world BCI applications.

The present application may entail, particularly self-paced, motor execution (ME) and motor imagery (MI).

Providing a more accessible EEG artificial intelligence (AI) training scenario, the method may utilize a self-paced environment for auto-labeling EEG data. As one example described in more detail below, a Pong-type game may serve as training task, allowing subjects to engage in MI/ME tasks while receiving immediate visual feedback.

To automate the labeling process of the recorded EEG data, as an example, the movements of one or both arms may be captured using inertial measurement units (IMUs) and analyzed through gesture recognition.

This training framework contributes to improved data collection and reduction of pre-processing for model training.

On one level, as will be demonstrated below, a particularly good performance is achieved when employing FNN and EEGNet in the method of the present disclosure, in particular in self-paced MI/ME tasks, which confirms one of the effects brought about by the subject-matter of the present disclosure. The evaluation demonstrates examples and respective classification accuracy, real-time processing speed, and power consumption.

Furthermore, auto-labeling methods will be described in more detail below, e.g., within the self-paced environment, particularly analyzing their impact on the classification performance of potential architectures.

The method of the present disclosure, as explained below, allows for accurate and efficient EEG data labeling, allowing for training robust models for prediction of time critical events. A full-scale evaluation of the FNN-based classification system has been carried out, as shown further below, demonstrating its efficacy in real-time MI/ME tasks.

Thus, the method of the present disclosure allows for employing neural networks, particularly FNNs, as a potent tool for EEG classification and allows for enhancing the accessibility, usability, and performance of EEG-based AI systems in real-world applications.

On another level, it is noted that the overall method, which may also be referred to as a pipeline, which uses the claimed steps, shows an improvement independently of the exact network architecture, which, among others is due to the training data being of higher quality, e.g. as being data collected and labelled in a specific manner.

According to the present disclosure, movement reference data may comprise motion data of the body part acquired by one or more motion sensors concurrently with the EEG data while the subject moves the body part in order to control the software.

For example, this may be used for the first scenario mentioned above. Motion data of a body part may include data acquired by the one or more motion sensors indicative of the motion of the body part. Motion data may comprise image data, such as from one or more cameras depicting the body part. Motion data, alternatively or in addition, may comprise data from a device held by or attached to the body part. For example, such motion data may comprise acceleration data, orientation data, or the like, e.g. data acquired by an inertial measurement unit, IMU. The respective body part may be a limb/extremity or part thereof, for example a hand, a wrist, an arm, a leg, or the like, but other body parts are similarly conceivable.

Using motion data acquired by sensors may be advantageous, as such sensor data provide information that is very closely related to the movement. Moreover, known technologies for processing such sensor data are advanced and provide precise and reliable motion detection.

According to the present disclosure, alternatively or in addition to sensor-acquired motion data, movement reference data may comprise expected motion data for the subject's body part derived from cursor movement, which is automatically generated, based on a current state of the software, such as state of a game, concurrently with the EEG data while a subject imagines motions of the body part directed at controlling the software.

This may be used in the second scenario described further above. A software may have well-defined behavior, for example when it comes to software with relatively limited functionality. In such a case, a state of the software may be a very good indicator for the cursor movement a subject would likely want to induce by moving their body part. Accordingly, such a cursor movement may be used to derive expected motion data for the subject's body part, i.e., the way the body part would be moved in order to cause the desired cursor movement. An example for software that would be very well suited for this scenario, is the game Pong, where a movement of a ball over the screen with a known trajectory is indicative of how a subject would want to move a cursor to move a paddle to position it such that the ball will hit the paddle. Since the overall situation is well-defined and has a low number of dimensions, estimations can be made with reasonable confidence as to intended movement.

While this method may be somewhat less precise than detecting an actual motion, it may be useful for some application scenarios, particularly, where the trained neural network is intended to be used without subject motion. Moreover, it may allow for easier data acquisition for training data, as no motion sensors are required. Accordingly, it may also increase the overall available amount of training data, as data can be acquired in spite of lack of motion detection equipment.

According to the present disclosure, automatic classification of the movement reference data may be carried out using a classifier trained to process movement reference data, particularly motion data acquired by one or more motion sensors.

Generally, any known classifier trained with the respective movement reference data may be used for this purpose. Performing automatic classification using a classifier allows for precise classification for different types of movement reference data and, accordingly, precise labeling of the EEG data. Thereby, overall high accuracy of predictions of the neural network of the present disclosure can be achieved.

According to the present disclosure, the method may comprise evaluation of the neural network's prediction accuracy using the classifier's prediction for motion data of the body part acquired by one or more motion sensors concurrently with the EEG data while the subject moves the body part in order to control the software as ground truth.

The evaluation in this way is a reliable indicator whether the neural network has been trained such that it is suitable for use. As an example, the method may comprise determining whether the prediction accuracy is at or above a predetermined level of accuracy and, if this is the case, may be deployed for use. Otherwise, as an example, training may be continued. Overall, a reliable and high quality trained neural network can be provided in this manner.

According to the present disclosure, the movement reference data may comprise the above-described motion data of the body part. The EEG data and the motion data may be collected concurrently, at same or at different at different sampling rates.

Sampling rates may, for example, be due to a respective setting at the EEG measurement device and/or motion sensor or they may be properties of the respective device that cannot be changed. For example, a camera may have a sampling rate that corresponds to the frame rate.

Labeling of the EEG data may comprise assigning a label for a time window in different manners. Some of them are particularly suitable when the data is acquired at different sampling rates as described above. Assigning a label for a time window may involve assigning a single or multiple labels to the time window. The label may be referred to as movement label.

The single label may, for example, be a label considered the most prominent label, which may be determined based on different criteria, such as most frequent or most recent.

For example, assigning a (e.g. single) label for a time window may comprise assigning the label based on the mode, i.e. the most frequent label within the time window over all samples included in the time window and their respective (movement) label, or a weighted mode of the (movement) labels of the samples included in the time window, such as with increasing weight towards the end of the time window, particularly using uniform or linear weights. In these examples, a single label may be assigned to a single time window.

In yet another example for labeling of the EEG data, which may particularly be employed when the neural network is an FNN, a confidence per class per sample within the time window may be applied (e.g. rather than assigning a single label to a time window). With this approach, the window may be described by a function of confidences per available class. This may allow for even deeper insights into the signal's dynamic. This may be seen as an example of labeling a window with multiple labels.

The above examples illustrate different ways that allow for addressing the issue of proper labeling of the EEG data even when sampling rates are different, thereby allowing for flexibility in terms of selection or settings of the devices used for acquiring the data while also ensuring quality of the training data and consequently of the trained neural network.

According to the present disclosure, the neural network may comprise a deep neural network, particularly a functional neural network, FNN, or a compact convolutional network for EEG data, such as EEGNet.

These types of neural networks are particularly suitable for handling EEG data as input data. EEG data are challenging, and the inventors found that these neural networks yield better prediction results than other machine learning techniques.

According to the present disclosure, during training, the cursor movement may be controlled based on the motions carried out by the subject and/or based on automatic classification of the movement reference data, particularly based on motion data of the subject's body.

Alternatively or in addition, during training, the cursor movement may be controlled based on an expected cursor movement derived from the current state of the software.

Regarding the expected cursor movement, reference is made to the explanations above. This may particularly be used where the motion is only imagined or the actual motion of the subject is not detected, e.g. when no suitable device is available or when the device is not functioning. This allows for more flexible and/or reliable data acquisition.

According to the present disclosure, after training of the neural network, EEG data acquired while a subject, particularly a user, imagines motions of a body part, e.g. directed at controlling a/the software, and/or while a subject, particularly a user, carries out motions of a body part, e.g. directed at controlling a/the software, particularly without an input device, may be processed by the neural network to predict a movement and the cursor movement may be controlled based on the predicted movement.

Particularly, the subject, e.g. user, may only imagine the motions of the body part and not carry out said motions.

As such, it becomes optional for the subject, e.g. user, to move. This allows for subjects, e.g. users, that cannot carry out said motions to still control the software. Even if the subject, e.g. user, wants to move, an input device and/or a motion detection is not required. That is, the subject, e.g. user, may carry out motions of the body part as if controlling the software by moving the body part. However, the software will be controlled by the predictions from the neural network based on the EEG data. It is possible, however, to have a mode where a hybrid control is enabled, e.g., where movement of the body part or some other user input is detected and used to supplement the prediction-based control.

According to the present disclosure, the movement reference data may comprise (the) motion data of the body part and the movement reference data may comprise data obtained using one or more motion sensors, the one or more motion sensors comprising an inertial measurement unit, IMU, and/or being mounted on the subject's body part during acquisition of the motion data, particularly being part of a wearable device, and/or the one or more motion sensors comprising a handheld monitoring device configured to obtain motion data of a body part of the subject when held by the subject and/or an external tracking device configured to obtain motion data, such as a camera-based monitoring device configured to obtain motion data and/or a laser-based monitoring device configured to obtain motion data. In principle, suitable devices or systems known in the art may be used for this purpose.

Thus, different types of motion detection are possible, allowing for flexibility to adjust to available hardware and/or technical requirements for the application at hand, e.g., the type of movement that is required to be recorded and/or certain data properties, such as size, type, quality or the like, required for the recoded data.

According to the present disclosure, EEG data may comprise sensor data from an EEG measurement device having a plurality of electrodes, such as an EEG cap, particularly wherein the EEG data comprises data from only a subset of the electrodes of the EEG measurement device, such as 4 to 16, in particular 7 to 9, in particular 8 electrodes.

In particular, the EEG measurement device may be a device that is suitable for use by non-professionals and unsupervised by professionals in the field of EEG data acquisition, e.g., by a subject outside of a clinical or academical setting. In particular, the EEG data acquisition may be non-invasive. The EEG measurement device may be configured such that no intermediate medium, e.g. for bridging a gap between the electrodes and the user surface (e.g. the skin), such as conductive paste or gel, is required for arranging the electrodes on the head. The attachment mechanism may be purely mechanical, e.g. by being pressed against the head. The cap may be configured in such a manner that, when mounted, the cap itself presses the electrodes against the head.

Using only a subset of the electrodes allows for a reduced amount of data having to be processed by the trained neural network, making execution time shorter and allowing for devices with lower computing capabilities to execute the brain computer interface during use. This is particularly important for portable devices and/or mobile applications. It will be understood that the method and system of the present disclosure allow for using only a subset of electrodes, i.e., applying said method/system enables to work only on a subset of electrodes while having high prediction accuracy.

As already briefly mentioned above, the software may be a software allowing for a subject moving, using the body part, an input device for moving a cursor so as to interact with the software. In some instances, the software may be a software with limited degrees of freedom for cursor movement, such as cursor up-down and/or cursor left-right movements.

Particularly, the software may be a game software, such as Pong, PacMan, modified versions of Pong or PacMan, or other, potentially more complex, games.

The present disclosure also provides a method for providing a brain computer interface, comprising acquiring EEG data; inputting the EEG data into a neural network trained to predict, from EEG data, a motion of the body part imagined or carried out, particularly without an input device, by the subject; and using the predictions output by the neural network for controlling functionality of a computing device. In other words, the present disclosure also provides employing the trained neural network in a brain computer interface. The neural network may be a neural network trained using methods according to the present disclosure, e.g., as outlined above or claimed.

The method according to the present disclosure may comprise training the neural network using a method according to the present disclosure.

The invention also provides a system comprising a computing system configured to carry out and/or control any of the methods of the present disclosure.

Optionally, the system according to the present disclosure may comprise a wearable device comprising a headset comprising a plurality of electrodes, the electrodes configured to record EEG data when positioned on the head of a subject.

Alternatively or in addition, the system may comprise a wearable device, particularly comprising an IMU, configured to obtain motion data of a body part of the subject when mounted to the body part and/or a handheld monitoring device configured to obtain motion data of a body part of the subject when held by the subject and/or an external tracking device configured to obtain motion data, such as a camera-based monitoring device configured to obtain motion data and/or a laser-based monitoring device configured to obtain motion data. In principle, suitable devices or systems known in the art may be used for this purpose.

The invention also provides a computer program product comprising instructions which, when the program is executed by a computer, cause the computer to carry out the methods of the present disclosure.

The invention also provides a computer-readable medium comprising instructions which, when executed by a computer, cause the computer to carry out the methods of the present disclosure.

The features and advantages outlined above in the context of the method similarly apply to the system, the computer program product, and the computer-readable medium described herein.

Further features, examples, and advantages will become apparent from the detailed description making reference to the accompanying drawings.

BRIEF DESCRIPTION OF THE DRAWINGS

In the accompanying drawings,

Fig. 1 illustrates an exemplary method according to the present disclosure;

Fig. 2 illustrates an exemplary method according to the present disclosure;

Fig. 3 illustrates a system according to the present disclosure;

Fig. 4 illustrates an overview of a proposed framework for semi automated EEG based AI training (dotted) and inference (dashed) to play video games by classifying ME and MI from the subject's brain activity;

Fig. 5 illustrates a PongSimplified screen with active countdown that can be used as software the subject interacts with;

Fig. 6 illustrates a linear acceleration of a left hand moving to the left (top) and a right hand moving to the right (bottom) in $m/s^2$ overtime as received by an IMU;

Fig. 7 illustrates an electrode selection for recording, ground, and reference;

Fig. 8 illustrates an exemplary schematic setup of hardware components;

Fig. 9 illustrates a schematic diagram of data flow and processing stages through the program;

Fig. 10 illustrates an EEG recording in time (left) and frequency (right) domain and processing thereof;

Fig. 11 illustrates exemplary, simplified architectures of the EEGNet (left) and FNN (right);

Fig. 12 illustrates loss (top) and accuracy (bottom) for training and validation data during long time training of the EEGNet and FNN over 50 epochs for ME, with uniformly labeled windows, averaged over all recordings/training runs;

Fig. 13 illustrates loss (MSE) and mean absolute error for training and validation data during training of the FNN (functional) over 20 epochs for ME, averaged over all recordings/training runs.

DETAILED DESCRIPTION

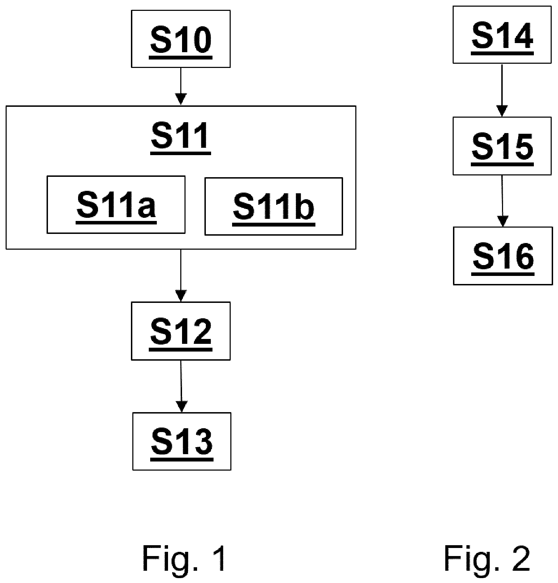

Fig. 1 illustrates an exemplary computer-implemented method for providing a neural network for analyzing EEG data for use in providing a brain computer interface according to the present disclosure.

In step S11, the method comprises obtaining training data from EEG data of a subject and movement reference data associated with the EEG data, the EEG data and movement reference data acquired concurrently and while a subject carries out motions and/or imagines motions of a body part directed at controlling a software. Obtaining the training data comprises, in step S11a, automatic classification of the movement reference data and, in step S11b, automatically labeling at least part of the EEG data based on the classification of the movement reference data associated with the EEG data.

In step S12, the method comprises using the training data to train a neural network to predict, from EEG data, a motion of the body part imagined and/or carried out by the subject.

In optional step S13, the method comprises evaluation of the neural network's prediction accuracy using a/the classifier's prediction for motion data of the body part acquired by one or more motion sensors concurrently with the EEG data while the subject moves the body part in order to control the software as ground truth.

In optional step S10, the EEG data and the motion data are collected, particularly concurrently at same or at different sampling rates. It is noted that the data collection may not necessarily be part of the method for providing the neural network, but may be carried out separately. The method for providing the neural network may access previously acquired data from one or more sources, for example.

Fig. 2 illustrates a method for providing a brain computer interface according to the present disclosure, the method comprising, in step S14, acquiring EEG data. The method further comprises, in step S15, inputting the EEG data into a neural network trained to predict, from EEG data, a motion of the body part imagined and/or carried out, particularly without an input device, by the subject. In step S16, the predictions output by the neural network are used for controlling functionality of a computing device. The neural network may be a neural network trained using a method according to the present disclosure, for example, the method as outlined in the context of Figure 1. The method may comprise training the neural network using a method according to the present disclosure, such as outlined in the context of Figure 1. In other words, Figure 2 illustrates the use of the trained neural network.

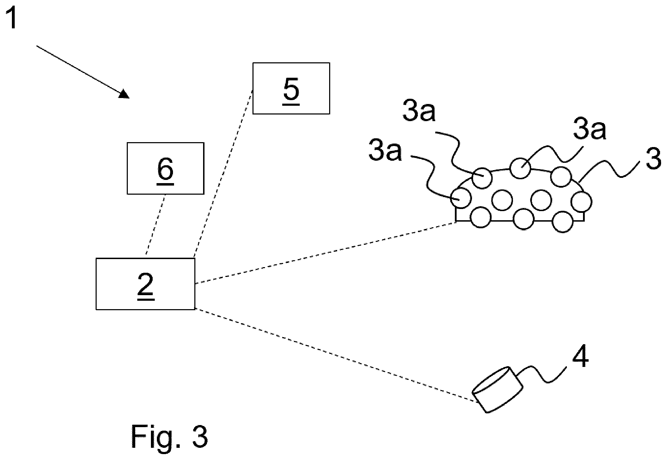

Fig. 3 illustrates a system 1 according to the present disclosure, the system comprising a computing system 2

configured to carry out the method of the present disclosure, e.g. as outlined above in the context of Figure 1 and/or Figure 2 or the claims. The system may optionally comprise a wearable device 3 comprising a headset comprising a plurality of electrodes 3a, the electrodes 3a configured to record EEG data when positioned on the head of a subject. Optionally, the system 1 may comprise a wearable device 4, particularly comprising an IMU, configured to obtain motion data of a body part of the subject when mounted to the body part and/or an external tracking device 5, 6 configured to obtain motion data, such as a camera-based monitoring device 5 configured to obtain motion data and/or a laser-based monitoring device 6 configured to obtain motion data.

The same or different devices may be used to record EEG data used for training and EEG data used for subsequent use of the trained network. If the devices are not the same, they may nonetheless be of the same type and/or configuration. This improves prediction accuracy.

Further features, explanations and advantages associated with the method and system of the present disclosure will be outlined below. In the following examples and descriptions, the terms user and subject will be used interchangeably.

The present disclosure may provide, among others, a real-time EEG-based BCI for self-paced motor imagery and motor execution using functional neural networks. Functional neural networks, FNN, are used for electroencephalography-based (EEG-based) BCI, targeting self-paced ME and MI. FNN represent a neural network architecture tailored to time series analysis. The present disclosure not only marks the pioneering utilization of FNN for EEG classification but also introduces their real-time inference capabilities within EEG data analysis. A comprehensive pipeline encompassing data acquisition, synchronization, pre-processing, training of FNN, and real-time inference is proposed, facilitating the seamless integration of FNN into real-world BCI applications.

In pursuit of a more accessible EEG AI training scenario, the present disclosure introduces a self-paced environment for auto-labeling EEG data. A custom-designed Pong game serves as the training task, allowing subjects to engage in MI/ME tasks while receiving immediate visual feedback. To automate the labeling process of the recorded EEG data, the movements of both arms are captured using IMU and analyzed through gesture recognition. This innovative training framework contributes to more natural and engaging data collection and reduction of pre-processing for model training.

To provide a comprehensive evaluation, the present disclosure compares the performance of FNN and EEGNet in the self-paced MI/ME tasks. The comparative analysis addresses factors such as classification accuracy, real-time processing speed, and power consumption. Furthermore, the study disclosed herein explores various auto-labeling methods within the self-paced environment, analyzing their impact on the classification performance of both architectures. By evaluating these labeling methods, the present disclosure addresses the challenge of accurate and efficient EEG data labeling, crucial for training robust models for prediction of time critical events.

The proposed pipeline and experimental design culminate in a full-scale evaluation of the FNN-based classification system, demonstrating its efficacy in real-time MI/ME tasks. FNN is herein established as a potent tool for EEG classification and the present disclosure presents systems and methods for enhancing the accessibility, usability, and performance of EEG-based AI systems in real-world applications.

The decoding of brain signals into a meaningful digital output is the basis of BCI. With this, mental states and actions can be used to control external devices. This possibility is especially useful to those suffering from motor impairments such as ALS, or different types of paralysis; a BCI would bypass affected muscular systems and allow the user to control an actuator with thought. Though BCI research has grown dramatically over the past few decades, BCI technology remains unavailable to many who would benefit from it.

Despite the potential of BCI, current data acquisition often involves simple and repetitive tasks that can be mentally exhausting for users, which not only hurts the experience of using such a system, but can also affect the performance of the BCI.

Furthermore, people may exhibit a so-called "BCI-illiteracy", for whom BCI systems seem to be incompatible. Such failures in usability can prevent people from taking advantage of EEG-based BCI, even when they have the potential to greatly enhance their quality of life. One of the ways to alleviate this is to increase the engagement of people using these systems by providing a better feedback system, e.g., through entertainment scenarios such as games. As an example, the use of gamification to make BCI data acquisition more engaging and enjoyable is proposed. By creating a game that utilizes brain waves as the control mechanism, BCI acquisition can become more accessible and interesting to a wider range of users. Furthermore, in labeling EEG data by detecting real movement with IMU, spontaneous brain activity is acquired as opposed to merely evoked brain data. Using IMU during the training/calibration phase of the experiments, also allowed the system to provide for accurate feedback to the users, where the game would respond to their movements and active engagement, making the system more interactive than a typical BCI where the subjects only follow given instructions possibly increasing the efficiency of the trained networks.

Another challenge affecting the dissemination of practical BCI technologies is the trade-off between the set-up and calibration time and the robustness of the system. Using fewer electrodes, or dry electrodes, to reduce the time required to acquire a signal can negatively impact the accuracy of the classifications made. To account for this, the system that was tested used only eight gel electrodes, while employing technologies of preprocessing along with functional neural networks. In this way, although preparing the EEG is not overly-cumbersome, quality data can be acquired, and the algorithms used for data processing and classification are sturdy enough to produce high accuracies.

Once the algorithms are robust and fast enough, they can be applied to other real life tasks, such as controlling machinery, such as robots or prosthetics. Using the algorithms in an online environment usually requires adjustments of the algorithms a and additional adaption during usage.

One step is the transfer of AI models to mobile platforms, removing the dependency of immobile lab equipment. Mobile AI needs optimization for the specific platform in use as power consumption is limited, latency must be kept low, and hardware acceleration is more limited than in workstation counterparts.

In the present disclosure, a pipeline to create an artificial intelligence for EEG based classification of real and imagined movements is provided. More specifically, proposed is a method to gather labeled data that can be used for training ML models. Further, two types of neural networks in terms of their respective prediction accuracy, power usage, and latency for the recorded data are compared. These neural networks can be implemented efficiently and are used for live inference. The presented pipeline utilizes gamification to reduce the stress on subjects and eliminate possible causes of "BCI-illiteracy".

In the following, a detailed description of the proposed framework, experiments, the neural networks used to classify EEG data, the corresponding classification results, and the performance metrics on an exemplary mobile platform will be described.

The present disclosure proposes an approach based on movement related signals, which, among other benefits, allow to provide a more intuitive way of interacting with the game. This framework benefits from automatic labeling and use of neural network architectures as described herein.

## SYSTEM AND METHOD

The overall system and method may aim to let a user play a game purely by imagining the movements needed to control the game. To achieve this goal, the system may be easily usable to avoid unnecessary obstacles and increase the chance of success. The framework used for the experiments combines systems of multiple disciplines in order to simplify the process of data acquisition, training, and finally controlling the game. This allows an intuitive use of the system.

### System Overview

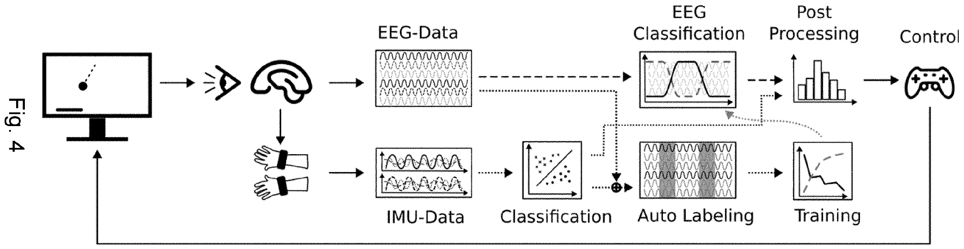

Figure 4 shows the proposed framework for semi automated EEG based AI training (dotted) and inference (dashed) to play video games by classifying ME and MI from the user's brain activity. Such a framework allows users to play a video game through analysis of their brain activity. On a monitor connected to the host system, the game's output screen is shown to the user, provoking a reaction from the user to counteract the problem given by the game.

Throughout, two different paradigms are used to control the game. Under the paradigm of ME, the user can interact with the game through predefined movements of their arms. Under the paradigm of MI, the user imagines the predefined movements without actually executing them.

In case of ME, in the training phase movements are recorded by IMU devices connected to the user's wrists and an EEG cap worn by the user which is connected to an amplifier. The recorded movement is streamed to the host system by both the IMU and EEG devices. The host stores the received data for later usage and feeds them into different classifiers for detection of the user's motion. The classifiers' predictions are further processed, stored and forwarded as control signals to the game. The game reacts depending on the given inputs and displays a reaction to the screen in front of the user. This closes the feedback loop to the user, creating an interactive and adapting interaction scenario. At inference time, only EEG data is recorded and used to control the game.

In the case of MI, no physical movement is executed. Instead, the horizontal direction of the ball replaces the IMU-based labels for training.

### Game Configuration

To reduce the stress on the subjects undertaking the experiments and counter BCI-illiteracy a gamification approach was used. This helps to improve engagement with the experiment through an increased enjoyment and motivation.

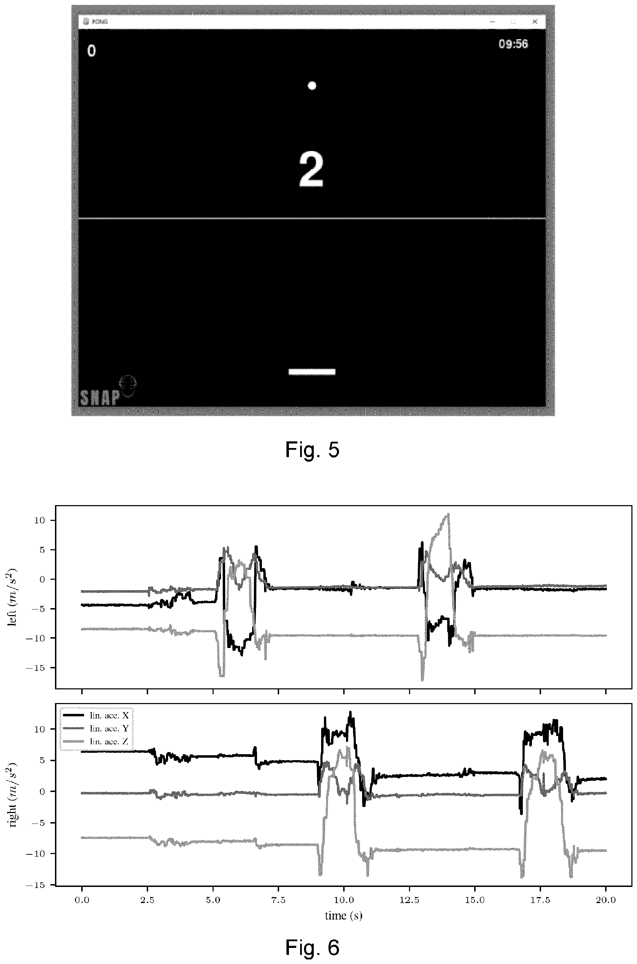

The game used for the training environment is a simplified version of the 1972 Atari, Inc. classic Pong, referred to as PongSimplified herein. In comparison to the original, the game is rotated by 90° such that the cursor moves horizontally to mirror the directions of the participant's arm movement which is translated into cursor movements. The game is displayed in Figure 5 showing a PongSimplified screen with active countdown, as an example.

Before the start of each game round, a countdown is shown to gain the participant's attention and the cursor is disabled. As the countdown reaches 0, the ball starts moving to the left or right bottom at the screen randomly. The user reacts by moving their left or right arm to move the cursor to the left or right edge of the screen respectively. When the ball hits the cursor or bottom of the screen, the ball is reset and the countdown starts again. Each round took 5.3 seconds and the process was repeated for 10 minutes, yielding approximately 56 times per side per user. Of course it is to be understood that these time, as well as other quantitative values in the present examples, are merely exemplary and should not be considered limiting for the invention.

**IMU Devices**

For the first phase of experiments, explained in further detail below, the real movement (ME) of the user is used as input to control the game. To detect the movement of the player's arms, IMU sensors were attached to the wrists of the user. Each IMU device samples the transversal acceleration and rotational velocity for all three axes, on top of a gravitational vector calculated on-chip with a rate of 50Hz, yielding a 9-dimensional data stream per wrist. The data is streamed via BLE to a dongle connected by USB to the host system, where the data is buffered and checked for package loss. For the IMU devices Bluekin Sensors by SNAP GmbH are used, as full control over the device is available and allowed fine grained adjustments.

Due to the high temporal resolution, this approach allows to detect even slightest movements of the user's arms, which might not be detectable with approaches based on cameras and image processing for motion detection. This allows a wide range of readily available IMU based motion detection algorithms to detect the user's movements to be used. Furthermore, using nine-dimensional IMU data reduces the processing power needed for classifications as opposed to high dimensional image data. An example of raw data from the IMU devices is shown in Fig. 6. Specifically, Fig. 6 illustrates, as an example, linear acceleration of left hand moving to the left (top) and right hand moving to the right (bottom) in $m/s^2$ over time as received by the IMU.

**EEG System**

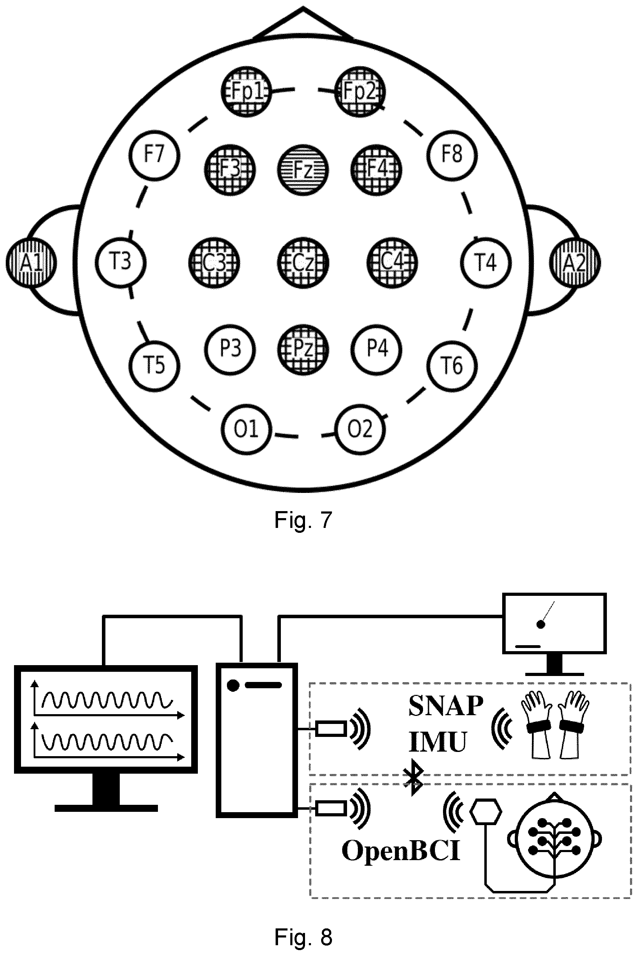

The second and third phase of the experiments, explained in further detail below, use real and imagined movements of the user obtained from the user's brain activity to control the game. Therefore, an EEG cap with 16 electrodes was placed on the user's head for capturing the user's brain activity by recording EEG signals from a subset of eight electrodes. For EEG data acquisition the Cyton Board by OpenBCI was used, which is connected to the host system via Bluetooth. The OpenBCI board was chosen due to the wide range of compatible headsets, and open source drivers. Other devices may be used instead. The board is connected to an Electro-Caps headwear providing 16 channels of wet electrodes following the 10-20 system. Signals were recorded from 8 of the 16 electrodes Fp1, Fp2, F3, F4, C3, C4, Cz, and Pz. A1 and A2 were used for ground and Fz as reference. During the whole recording sessions impedance of each electrode was kept below 20kΩ. Headwear and electrode setup are displayed in Fig. 7, which specifically illustrates an example of electrode selection for recording (Fp1, Fp2, F3, F4, C3, C4, Cz, Pz), ground (A1, A2), and reference (Fz).

All signals were recorded with a 24bit resolution yielding an eight-dimensional data vector that is streamed via Bluetooth to the host system at a sample rate of 250Hz. The stream is buffered and checked for package loss at the host.

**Hardware Setup**

A central component of the system may be the main PC, running the software to gather data from the sensors, train and run the ML models, hosting the game and by forwarding the predictions to the game as input to create a user game interaction. The PC used was a custom build computer running Windows 10 22H1 powered by an Intel Core i7-8700K, Nvidia GTX 1080TI, and a SAMSUNG 870 EVO SATA III SSD. The BLE receiver for the IMU devices and OpenBCI's BLE dongle for the CytonEEG amplifier were connected via USB 3.0 ports. Both, the IMU devices and EEG amplifier are battery powered and did not have a direct connection to the host system. The PC was connected to two monitors, the first for the operator to control and supervise the experiment, the second display for displaying the game screen to the user.

Wireless sensors and two monitors allowed more flexibility and better supervision of the experimenter, creating a more relaxed environment for the user. A schematic setup of the hardware components during experiments is displayed in Fig. 8.

Note that the hardware is merely exemplary and other hardware setups can be used.

**Machine Learning Models**

The recorded EEG data is used for motion detection, whether ME or MI, in order to generate control signals for the game. To handle the complexity of EEG data, ML based models, and specifically DNN, are well suited and were used to classify the EEG data streams. EEGNet and FNN were used for benchmarking. The data received by the sensors is pre-processed, before it is used for training and inference with the ML model. The predictions made by the model are further post-processed to smooth the control signals given to the game. More details are provided in the section **Classification.**

**Software**

The data streams of all components are managed by a central software deployed on the host system. It manages all connected devices, ML inference and the game to provide an easy to use, all in one system for experiments.

First, the data per sensor is collected from the connected BLE receivers, checked for package loss, and afterwards buffered locally. Lost packages are filled through interpolation and the buffer is saved to the disk regularly to create a recording for offline use later on, including training of the ML models. Each of these steps is carried out by individual threads per device, distributing the load on the host processors hardware more efficiently and effectively eliminating package loss.

An additional classifier is implemented into the threads handling the IMU device data streams, to detect movements, store them as a label alongside the raw recording data and pass it to the game as control input if needed.

In a next step, the data of all devices is synchronized to accommodate for any time drift and taking the different sample rates per device into account. The fused data is then buffered and stored, to be used for ML training.

During the data collection phase, the data is collected and stored as described above. The predictions from the IMU classifier are forwarded to the game as input for the ME scenario. In the MI scenario, no data is used as the input but the cursor is moved to the expected side automatically, to give the user some kind of feedback.

After collecting the data and training some ML model, the inference phase is started. Here, an additional thread is added, hosting the previously trained ML model predictions on the EEG data. The data from the thread handling the EEG device is then also forwarded to the EEG classifier for motion detection. Instead of the IMU classifier's predictions, now the predictions of the EEG classifier are forwarded to the game as control inputs. The IMU classifier's predictions are used as ground truth for later evaluations of the EEG classifier's accuracy.

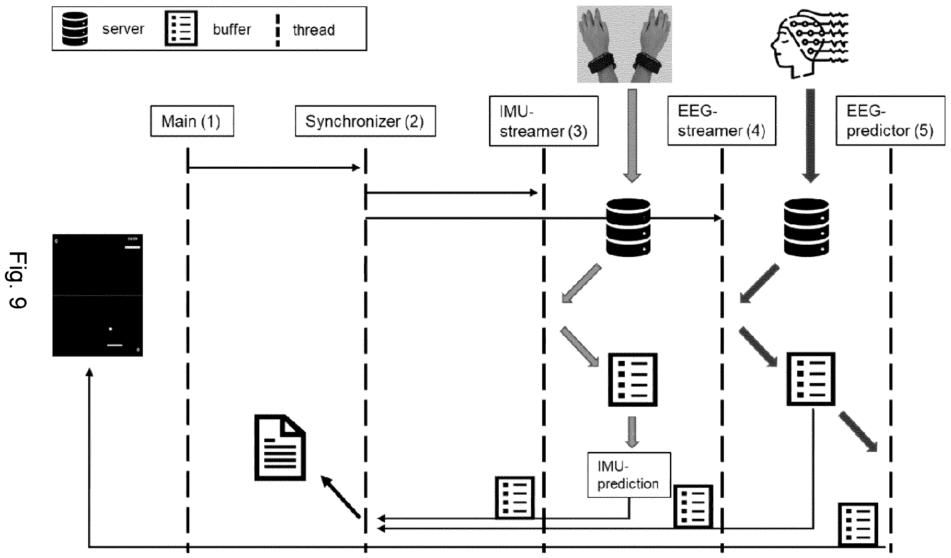

The interaction of threads, buffers, and the general data flow through the program are displayed in Fig. 9. Said figure is a schematic diagram of data flow and processing stages through the program.

**Subjects and Recordings**

A total of 10 subjects (4 female, 6 male) volunteered for this study. The participants were aged between 21 and 31 years (M = 24.9 years, SD = 3.35). None of them reported a neurological disease. Seven participants were right-handed, two left-handed and one ambidextrous. Two of the participants wore visual aids. The time spent for weekly workout was stated from 0 to 21 h (M = 6.5 h, SD = 6.65). Three subjects stated that they never play video games, other three subjects reported playing video games sometimes. The remaining four subjects stated to play videogames on a regular basis.

In total 24 ME and 7 MI EEG recordings were collected from the 10 subjects.

**EXPERIMENTS**

The experiments were conducted in two steps: a learning phase, and a subsequent inference phase. In both phases, EEG data is recorded to use for training and controlling respectively. Between the phases a short break of approximately 7 to 8 minutes was taken for the subject to relax and train the ML model with the recorded EEG data to be used in the inference phase.

**Learning Phase**

During the recording phase, the subject plays the SimplifiedPong game for 10 minutes. In the first step, when ME is used, the subject moves the left hand to the left, if the cursor should move to the left side of the screen, or the right hand to the right, if the cursor should move to the right side. The movement is done at the subject's pace, while the IMU classifier detects the movement recorded from the participants wrist and labels the EEG data accordingly.

For MI the user imagines the movements described above, but does not move. As no real movement can be used for labeling, the direction of the ball on screen is used for labeling the EEG data. Here the assumption is, that the imagined motion corresponds approximately to the ball's movement, thus starts with the beginning of each round and ends, when the ball hits either the cursor or bottom of the screen.

**Inference Phase**

After a short break for the subject to rest, and train the ML model with the recorded EEG data, the subject was asked to play SimplifiedPong again. This time, instead of the predictions from the classifier for IMU data, the predictions of the previously trained EEG classifier are used to control the cursor on screen. The subject moved their hand (ME) or imagined the hand's movement (MI) depending on the experiment and IMU data is ignored in all cases.

## MACHINE LEARNING MODELS

The analysis of EEG data, specifically in the context of BCI, can be broadly classified into two categories. Traditional approaches are based on a careful selection of handcrafted features and simpler machine learning models. Deep neural networks are used herein to classify EEG data and outperform previous approaches. In contrast to traditional methods, neural networks are assumed to learn features themselves and do not require extensive pre-processing of the data.

Another advantage of neural networks is that they can be implemented to make efficient use of GPUs, which speeds up the training and allows to make predictions with low latency. The latter is crucial for a good user experience and an effective game play.

In the following, two different types of neural networks to classify the recorded EEG data are used. First, EEGNet, a convolutional neural network particularly suitable for EEG data, is used as a benchmark. Second, FNN, which preserve the smoothness of the underlying data generating process are used.

### Pre-Processing

In general, neural networks do not require an extensive pre-processing of the data. However, due to the low SNR of EEG data, it is still helpful to apply some form of filtering to the data. In the following, as examples, two different methods to pre-process the raw EEG recordings, depending on the architecture of the neural network that is used for classification, are used.

### Bandpass Filter

Brain activity related to motion is often assumed to be in the frequency range between 1 and 40. The EEGNet is based on this assumption and works better with previously filtered data rather than with raw data. Thus, a bandpass filter can be used to keep only the part of the signal corresponding to this frequency range. In particular, in the present example, 50 Hz noise from the power grid.

### Local Linear Estimation

Many physical processes can be considered as smooth, which includes the electrical activity on a person's scalp. An alternative to bandpass filtering is smoothing the recorded EEG data to reduce the signal's noise. This further allows us to use neural networks that preserve smoothness of data, such as the FNNs that were used for modeling in this example. More specifically, local linear estimation was used to smooth the recorded EEG data and estimate its first derivative.

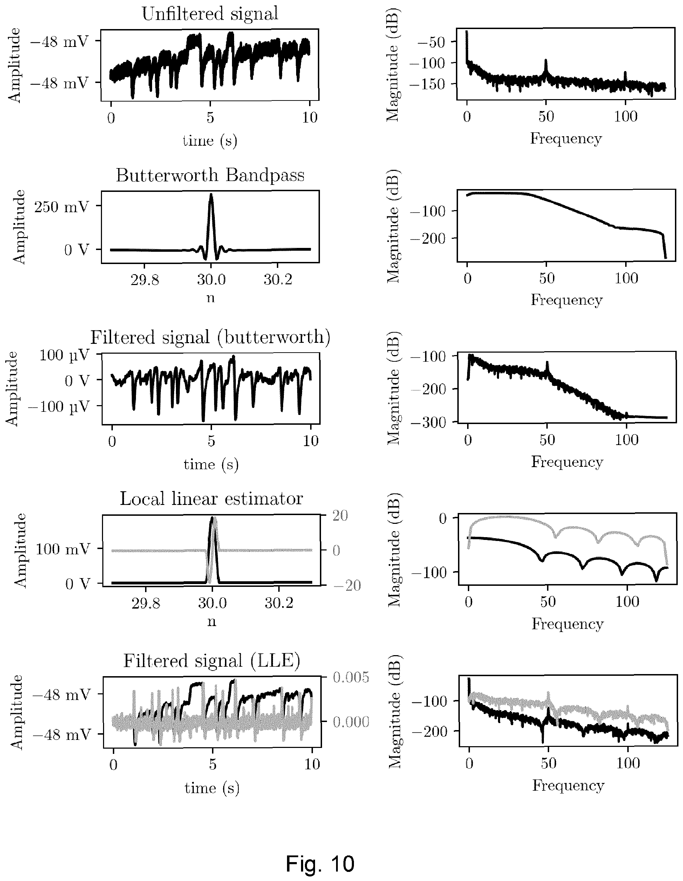

In Fig. 10, the first row shows an exemplary EEG recording of the Fp1 channel in the time (left) and frequency domain (right). The high value in the frequency domain close to 0 Hz represents the offsite and drift. The second row shows the effect of a Butterworth band-pass (fp = 1 Hz, fs = 40 Hz, N = 5) in time and frequency domain and the applied effect on the EEG data in row three.

The local linear estimator, LLE, (quadratic kernel, bandwidth h=0.02) provides the filtered signal and its derivation. The behavior in time and frequency domain of the LLE is shown in the fourth row, where the filtered signal and the derivation are shown. Fifth row shows the EEG signal after the LLE was applied. As the band-pass filter dampens the frequencies, the LLE provides an additional estimation of the signal's change, giving further insights.

Of course it is to be understood that Fig. 10 is only one potential example provided for illustration and is not to be considered limiting for the scope of the invention.

### Model Architectures

### EEGNet

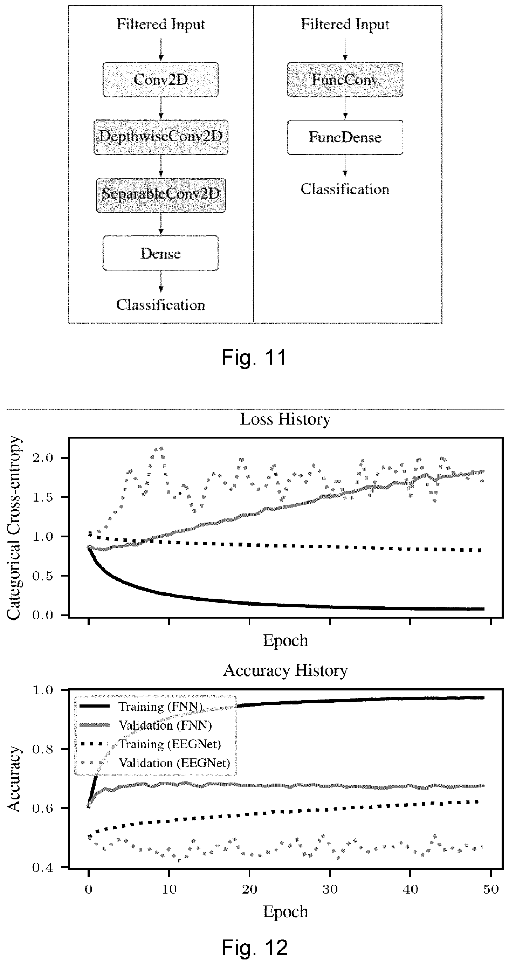

EEGNet is a convolutional neural network that is particularly suitable for the classification of EEG data and is capable to generalize across different BCI paradigms. EEGNet consists of a regular convolutional layer followed by a depthwise and a separable convolutional layer. After each convolution, the data is normalized batchwise. After the second and third convolution, it is additionally activated with the ELU activation function and fed into an average pooling and a dropout layer. Finally, the signal is forwarded into a dense layer with softmax activation that outputs a confidence score for each category. The architecture of EEGNet is displayed on the left of Fig. 11.

As an example for hyperparameter choices, the number of filters F1 in the first convolution is set to eight, the depth D of the depthwise convolution to two and the number of filters F2 in the last convolution to 16. Further, a dropout rate of 50 % was used for both dropout layers and bound the weights in the final dense layer by 0.25.

Functional Neural Networks

When data, that can be interpreted as discretized version of some smooth signal, is fed into a neural network, the smoothness of the underlying signal is often not taken into account by the model. The branch of statistics that deals with this kind of data, functional data analysis (FDA), received more and more attention over the last decades. According to the present disclosure, functional versions of convolutional and dense layers. These layers can be used to define neural networks that are able to model smoothness while still being shift invariant. An FNN with a functional convolutional and a functional dense layer was used, as displayed on the right of Fig.11.

More specifically, as an example, a local linear estimator with quartic kernel and bandwidth h=0.02 to smooth the data was used. The convolutional layers has 20 filters of length 25, which are represented as linear combinations of the first five Legendre polynomials. Further, as an example, the ELU activation function in those layers was used. The final dense layer has one unit per class, integrates over time to reduce the functional data to scalar values, and finally uses the softmax activation.

**Training**

The distribution of EEG data highly varies from one subject to another and even from one session to another. In order to avoid problems related to subject-to-subject and session-to-session transfer, we train one model per recording. To validate the models' quality, we use the first 8 minutes of each 10 minute recording for training and the remainder to estimate the models' out-of-sample error. In particular, there is no overlap between training and validation data and any potential data leakage that might be due to non-stationarity of the signal is avoided. This example comprises shuffling both the train and test sets and drawing randomly from the corresponding set for training and validating the models.

We recorded EEG and IMU data simultaneously, yet with different sample rates. To automatically label the EEG data, first a simple classifier was used to predict a movement per IMU sample at 50 and afterwards the predicted movements were upsampled to match the 250 of the EEG data stream.

Both models expect 1s of 8-channel EEG data as input, resulting in input matrices of size 8x250. As there is one movement label per sample, it is challenging how to choose the label of an entire window. One approach would be to use the label of the last sample only, yet this approach is susceptible to outliers and fluctuations of the IMU predictions. A more robust approach is to use the mode of the movement labels, i. ,e., the most frequent label per window. The mode is easy to calculate, yet giving uniform weights to all samples leads to a higher latency during inference. A sensible trade-off between these two extremes is to use a weighted mode, giving more weight to samples at the end of the window. In the following the latter two approaches were used, giving uniform and linear weights to each sample in a given window.

The models are trained with the Adam optimizer to minimize the categorical cross-entropy. In both cases, 6400 windows per epoch, divided into 200 batches of size 32 were used. After each epoch, 50 batches of the same size to estimate the out-of-sample error were used. The models used for inference are trained for 50 epochs. The learning curves of the EEGNet and FNN are displayed in Fig. 12. Fig. 12 shows loss (top) and accuracy (bottom) for training and validation data during long time training of the EEGNet and FNN over 50 epochs for ME, with uniformly labeled windows, averaged over all recordings/training runs.

**Fully Functional Classification**

As stated previously, aggregating movement labels per time step to a single label per window is a challenging, yet, it is required by many classification algorithms. Instead of using the (weighted) mode to one-hot encode the labels, it would also be possible to calculate confidence scores per class or use any other aggregating function. The specific choice of aggregation might lead to substantially different results in the measured model quality and its reliability as experienced by the user.

Another approach to tackle this challenge is to predict one class label per time step and only afterwards combine the predictions to a single classification per window. In this way, the neural network learns to model the relation between EEG and IMU data and any design choices are postponed to the post-processing.

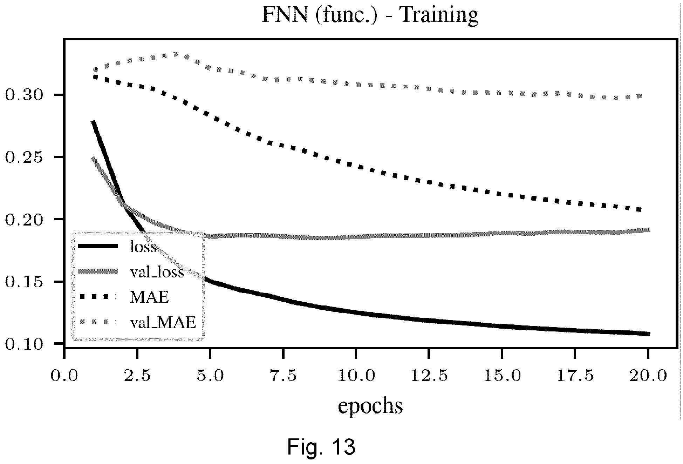

Therefore, the FNN can be slightly adapted as described above by replacing the final functional dense layer with a functional convolution. As the functional layers transform functions into functions, the model's output is fully functional again, yielding confidence scores per time step and class. The fully functional network may be trained to minimize the mean squared error of the predictions. The learning curve over 20 epochs is displayed in Fig. 13, showing, as an example, loss (MSE) and mean absolute error for training and validation data during training of the FNN (functional) over 20 epochs for ME, averaged over all recordings/training runs.

In the following, reference is made to scalar classifiers as FNN (scalar) and to functional classifiers as FNN (functional) as an example.

**Inference**

To keep the game playable and allow a full immersion of the player into the game, the latency between the user's action and the response of the game needs to be kept low.

In the following, a merely exemplary test setup used to test latency is described. The trained EEGNet and FNN model as described above was deployed to a NVIDIA Jetson Nano (4GB) and NVIDIA Jetson TX2. The platforms were chosen due to the integrated GPU providing CUDA Cores and as a test to bring the system to mobile platforms in the future, to make the EEG system usable in a wider variety of scenarios and increase engagement with the system.

To increase performance, the models were converted into NVIDIA's TensorRT (8.2.1.8) format in this example. No quantization, pruning, or other structural optimizations were applied, besides the default settings of the converter. The corresponding preprocessing steps of the FNN and the EEGNet were implemented as TensorFlow layers for compatibility of the models.

For the benchmark EEG data was streamed to the system. The data was then used to initialize the models by passing it through them. Afterwards, the samples were passed through the models several times to eliminate external factors, such as CPU or GPU load from other processes. During the model inference the time needed for one classification and the average power-consumption was measured alongside the models' accuracies.

**RESULTS**

**Training**

A series of experiments was conducted to compare different combinations of label methods, network structures, and movement types. For comparison of the models' performances, different metrics were used. The accuracy indicates the rate of correctly classified labels TP and TN against all classifications. More specifically, if FP denotes FP, i.e., negative samples classified as positive, and FN denotes FN, the accuracy of a (binary) classifier is defined by

$$\text{accuracy} = \frac{\text{TP} + \text{TN}}{\text{TP} + \text{TN} + \text{FP} + \text{FN}} \qquad (1)$$

For a classifier that distinguishes between more than two classes, the accuracy was defined analogously as the ratio of correctly classified samples divided by the number of all samples.

As the accuracy is determined primarily by classes that occur more frequently, in the present disclosure the null-class for "no movement", the precision and recall are additionally used, as defined per class c by

$$\text{precision}_c = \frac{\text{TP}_c}{\text{TP}_c + \text{FP}_c} \qquad (2)$$

$$\text{recall}_c = \frac{\text{TP}_c}{\text{TP}_c + \text{FN}_c}, \qquad (3)$$

and as average over all classes by

$$\text{precision} = \frac{1}{3} \sum_{c=1}^{3} \text{precision}_c \qquad (4)$$

$$\text{recall} = \frac{1}{3} \sum_{c=1}^{3} \text{recall}_c. \qquad (5)$$

The results for all trainings are listed in Table 1, where each training was run for 50 epochs.

**TABLE 1:** Accuracy, precision and recall (in %) for trainings of 50 epochs for different networks using ME and MI data, averaged over all recordings/training runs.

| | EEGNet | | | FNN (scalar) | | | FNN (functional) | | |
|---|---|---|---|---|---|---|---|---|---|
| labels | accuracy | precision | recall | accuracy | precision | recall | accuracy | precision | recall |
| *Panel A: Motor Execution (ME)* | | | | | | | | | |
| uniform | 40.07 | 36.53 | 36.42 | 67.99 | 65.29 | 66.18 | 68.10 | 61.37 | 68.18 |
| linear | 35.28 | 36.55 | 35.75 | 68.39 | 65.76 | 66.29 | 67.89 | 61.54 | 66.82 |
| *Panel B: Motor Imagery (MI)* | | | | | | | | | |
| uniform | 35.63 | 32.66 | 33.47 | 58.17 | 58.27 | 58.42 | 52.66 | 52.73 | 52.83 |
| linear | 37.38 | - | 33.33 | 58.34 | 58.37 | 58.54 | 54.05 | 54.44 | 53.98 |

**Inference**

The results of the model inference on the mobile platform are shown in Table 2, where P denotes the average power consumed during one classification, and T the time needed per classification. Derived from those metrics are the EPC as EPC = P*T, CPS as CPS = 1000/T, and the score as CPS/EPC. The score is used to favor CPS linearly, as this often can be increased with pure processing power, and EPC non-linearly, as better power usage has a bigger impact on the longtime usage on mobile platforms.

**TABLE 2:** Performance metrics of different ML Models on the NVIDIA Jetson Nano (4GB)

| Model | P [$mW$] | T [$ms$] | EPC [$\mu J$] | CPS | score |
|---|---|---|---|---|---|
| EEGnet | 1.79 | 1.74 | 3.11 | 574.83 | 184.89 |
| EEGriet+pp | **1.30** | 4.47 | 5.83 | 223.75 | 38.38 |
| FNN (scalar) | 1.79 | **1.51** | **2.70** | **661.00** | **244.38** |
| [52] | 0.11 | 5.82 | 0.63 | 171.82 | 274.04 |

For the test setup, EEGNet and FNN drew the same power, which is caused by power limitations of the platform, as the GPU was maxed out during the benchmarks of either network. When data is preprocessed before being put into the EEGNet, average power consumption was reduced by 27.4% down to 1.30mW. Execution times are best for the FNN with 1.51ms. EEGNet without preprocessing is 15.23% slower than the FNN. If preprocessing is added to the EEGNet, execution time is 196.02% slower. Taking execution time and the fact, that the preprocessing is done by numpy on the less power consuming CPU, the low power consumption can be explained as an effect of averaging. This also explains the difference between the different model's EPC, where the FNN outperforms the EEGNet by 13.18%, and by 53.69% if preprocessing is included.

The CPS shows, that both, the EEGNet without preproccessing and the FNN, but not the EEGNet with preprocessing, can be used for real-time classifications per sample when the OpenBCI Cyton is used at 250Hz. When combining EPC and CPS into the score, the FNN performs best in this benchmark, as it is more energy-efficient while allowing more classifications in the same time period.

Thus, to summarize, a workflow of using game software to make EEG experiments more accessible to subjects. This is, among others, an approach to counter BCI related problems, such as BCI illiteracy, and allow for improved data acquisition. In the first phase, a simplified version of the well known Pong by Atari Inc. was set up for the subject to play, while EEG data from a head-cap and IMU data from the wrists were recorded. This allowed the user to move freely at its own pace while simultaneously labeling the EEG with actual movement and eliminating any additional manual labeling processes. Consequently, the AI models could be trained after an initial 10 minute recording phase reducing the time from acquisition to inference drastically. Besides ME, a second experiment was conducted where the user did not actively move, but imagined the movements needed to control the cursor as it moved automatically. In this scenario, the cursor movement was used for labeling the data. Training after automated labeling was carried out. For aggregating labels per time step to a single label per window, the classic approach of uniform labels was tested against linearly weighted labels. After training, the subject played the game again, but this time the EEG data was classified by the trained model to predict the player's movements. This input was then used to control the game allowing the player to continue where he left of during acquisition. To show suitability for mobile BCI the trained models' performances were tested for usage on mobile platforms. As an example, an NVIDIA Jetson was used to benchmark throughput and energy consumption of the EEGNet and FNN. It has been shown by the inventors, as illustrated above, that both networks can be used for classifying EEG data in real time, but the FNN outperforms the EEGNet with 2.70 μJ against 3.11 μJ of energy consumption per classification and 574.83 versus 661.00 classifications per second. Thus, FNN are particularly suitable for mobile platforms.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

ACRONYMS

AI = artificial intelligence
ALS = amyotrophic lateral sclerosis
BCI = brain computer interface
BLE = Bluetooth Low Energy
DNN = deep neural network
DT = decision tree
CM = confusion matrix
CNN = convolutional neural network
CPS = classifications per second
EEG = electroencephalography
ELU = exponential linear unit
EPC = energy per classification
ERD = event-related de-synchronization
ERP = event-related potential
ERS = event-related synchronization
FN = false-negative
FNN = functional neural network
FP = false-positive
IMU = inertial measurement unit
LLE = local linear estimator
LSTM = long short-term memory
ME = motor execution
MI = motor imagery
ML = machine learning
NN = neural network
RM = real movement
SNR = signal-to-noise ratio
TN = true-negative
TP = true-positive
SVM = support vector machine
SSVEP = steady state visually evoked potential

**Claims**

1. A computer-implemented method for providing a neural network for analyzing EEG data for use in providing a brain computer interface, the method comprising

obtaining (S11) training data from EEG data of a subject and movement reference data associated with the EEG data, the EEG data and movement reference data acquired concurrently and while a subject carries out motions and/or imagines motions of a body part directed at controlling a software,
wherein obtaining the training data comprises automatic classification (S11a) of the movement reference data and automatically labeling (S11b) at least part of the EEG data based on the classification of the movement reference data associated with the EEG data;
using (S12) the training data to train a neural network to predict, from EEG data, a motion of the body part imagined and/or carried out by the subject.

2. The method of claim 1, wherein the movement reference data comprises motion data of the body part acquired by one or more motion sensors concurrently with the EEG data while the subject moves the body part in order to control the software.

3. The method of any of the preceding claims, wherein the movement reference data comprises expected motion data for the subject's body part derived from cursor movement, which is automatically generated, based on a current state of the game, concurrently with the EEG data while a subject imagines motions of the body part directed at controlling the software.

4. The method of any of the preceding claims, wherein automatic classification of the movement reference data is carried out using a classifier trained to process movement reference data, particularly motion data acquired by one or more motion sensors.

5. The method of claim 4, comprising evaluation (S13) of the neural network's prediction accuracy using a/the classifier's prediction for motion data of the body part acquired by one or more motion sensors concurrently with the EEG data while the subject moves the body part in order to control the software as ground truth.

6. The method of any of the preceding claims,

   wherein the movement reference data comprises (the) motion data of the body part,
   wherein the EEG data and the motion data are collected (S10) concurrently, particularly at different sampling rates, and
   wherein labeling of the EEG data comprises assigning a label for a time window, the assigning particularly comprising:

   assigning the label based on a mode, i.e. the most frequent label within the time window over all samples included in the time window and their respective label, or based on a weighted mode of the labels of the samples included in the time window, such as with increasing weight towards the end of the time window, particularly using uniform or linear weights, or
   applying a confidence per class per sample within the time window, in particular by describing a time window by a function of confidences per class.

7. The method of any of the preceding claims, the neural network comprising a deep neural network, particularly a functional neural network, FNN, or a compact convolutional network for EEG data, such as EEGNet.

8. The method of any of the preceding claims,

   wherein, during training, the cursor movement is controlled based on the motions carried out by the subject and/or based on automatic classification of the movement reference data, particularly based on motion data of the subject's body part and/or based on an expected cursor movement derived from the current state of the software, and/or
   wherein, after training of the neural network, EEG data acquired while a subject, e.g. a user, imagines motions of a body part directed at controlling a/the software and/or while a subject, e.g. a user, carries out motions of a body part directed at controlling a/the software, particularly without an input device, are processed by the neural network to predict a movement and the cursor movement is controlled based on the predicted movement.

9. The method of the preceding claims,

   wherein the movement reference data comprises (the) motion data of the body part and
   wherein the movement reference data comprises data obtained using one or more motion sensors, the one or more motions sensors comprising an inertial measurement unit, IMU, and/or the one or more motions sensors being mounted on the subject's body part during acquisition of the motion data, particularly being part of a wearable device, and/or the one or more motion sensors comprising a handheld monitoring device configured to obtain motion data of a body part of the subject when held by the subject, and/or wherein the movement reference data comprises data obtained using an external tracking device (5, 6) configured to obtain motion data, such as a camera-based monitoring device (5) configured to obtain motion data and/or a laser-based monitoring device (6)

configured to obtain motion data, and/or
wherein EEG data comprises sensor data from an EEG measurement device having a plurality of electrodes, such as an EEG cap, particularly wherein the EEG data comprises data from only a subset of the electrodes of the EEG measurement device, such as 4 to 16, in particular 7 to 9, in particular 8 electrodes.

10. The method of any of the preceding claims,
wherein the software is a software allowing for a subject, e.g. a user, moving, using the body part, an input device for moving a cursor so as to interact with the software.

11. A method for providing a brain computer interface, comprising

acquiring (S14) EEG data;
inputting (S15) the EEG data into a neural network trained to predict, from EEG data, a motion of the body part imagined or carried out, particularly without an input device, by the subject;
using (S16) the predictions output by the neural network for controlling functionality of a computing device,
in particular, wherein the neural network is a neural network trained using the method of any one of claims 1 to 10.

12. The method of claim 11 comprising training the neural network using a method of any of claims 1 to 10.

13. A system (1) comprising a computing system (2) configured to carry out the method of any of claims 1 to 12, and optionally comprising a wearable device (3) comprising a headset comprising a plurality of electrodes (3a), the electrodes (3a) configured to record EEG data when positioned on the head of a subject, and/or the system (1) comprising a wearable device (4), particularly comprising an IMU, the wearable device configured to obtain motion data of a body part of the subject when mounted to the body part and/or an external tracking device (5, 6) configured to obtain motion data, such as a camera-based monitoring device (5) configured to obtain motion data and/or a laser-based monitoring device (6) configured to obtain motion data.

14. A computer-program product comprising instructions which, when the program is executed by a computer, cause the computer to carry out the method of any of claims 1 to 11.

15. A computer-readable medium comprising instructions which, when the program is executed by a computer, cause the computer to carry out the method of any of claims 1 to 11.

S10

S11

S11a    S11b

S12

S13

Fig. 1

S14

S15

S16

Fig. 2

Fig. 3

Fig. 4

Fig. 5

Fig. 6

Fig. 7

Fig. 8

Fig. 9

Fig. 10

Fig. 11

Fig. 12

Fig. 13

| | Europäisches<br>Patentamt<br>European<br>Patent Office<br>Office européen<br>des brevets | **EUROPEAN SEARCH REPORT** | Application Number<br>**EP 24 17 6415** |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2022/000426 A1 (FRIEDMAN JASON [IL] ET AL) 6 January 2022 (2022-01-06)<br>* paragraphs [0004] - [0079]; figures 1-6 * | 1-15 | INV.<br>G06F3/01<br>G06F3/0346<br>G06F3/03 |
| A | US 2020/192478 A1 (ALCAIDE RAMSES [US] ET AL) 18 June 2020 (2020-06-18)<br>* paragraphs [0045] - [0114]; figures 1-9A * | 1-15 | |
| A | FLORIAN HEINRICHS ET AL: "Functional Neural Networks: Shift invariant models for functional data with applications to EEG classification",<br>ARXIV.ORG, CORNELL UNIVERSITY LIBRARY, 201 OLIN LIBRARY CORNELL UNIVERSITY ITHACA, NY 14853,<br>10 August 2023 (2023-08-10), XP091579695,<br>* pages 1-6 * | 1-15 | |
| | | | **TECHNICAL FIELDS<br>SEARCHED (IPC)**<br><br>G06F |

The present search report has been drawn up for all claims

| Place of search | Date of completion of the search | Examiner |
|---|---|---|
| Munich | 24 October 2024 | González Carballo, N |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
................................................................................
& : member of the same patent family, corresponding
   document

## ANNEX TO THE EUROPEAN SEARCH REPORT
## ON EUROPEAN PATENT APPLICATION NO.

EP 24 17 6415

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | Publication date | Patent family member(s) | Publication date |
|---|---|---|---|
| US 2022000426 A1 | 06-01-2022 | US 2022000426 A1<br>WO 2020095299 A1 | 06-01-2022<br>14-05-2020 |
| US 2020192478 A1 | 18-06-2020 | CN 111629653 A<br>EP 3672478 A1<br>JP 7532249 B2<br>JP 2020532031 A<br>KR 20200101906 A<br>US 2020192478 A1<br>US 2022404910 A1<br>WO 2019040665 A1 | 04-09-2020<br>01-07-2020<br>13-08-2024<br>05-11-2020<br>28-08-2020<br>18-06-2020<br>22-12-2022<br>28-02-2019 |

EPO FORM P0459

For more details about this annex : see Official Journal of the European Patent Office, No. 12/82